# EUROPÄISCHE PATENTSCHRIFT

(11) **EP 3 883 082 B1**
(45) Veröffentlichungstag und Bekanntmachung des Hinweises auf die Patenterteilung: **20.08.2025**
(21) Anmeldenummer: 21158025.3
(22) Anmeldetag: 19.02.2021
(51) Int. Cl.: H02J 3/00, H02J 3/06, H02J 3/24, H02J 3/28

(54) **VERFAHREN UND LEITSTELLE EINGERICHTET ZUM BEREITSTELLEN VON REGELLEISTUNG IN EINEM ELEKTRISCHEN ENERGIEVERSORGUNGSNETZ**
METHOD AND CONTROL POINT FOR PROVIDING CONTROLLING POWER IN AN ELECTRICAL POWER SUPPLY NETWORK
PROCÉDÉ ET CENTRE DE COORDINATION CONÇU POUR FOURNIR LA PUISSANCE DE RÉGLAGE DANS UN RÉSEAU D'ALIMENTATION ÉLECTRIQUE

(30) Priorität: 18.03.2020 DE 102020107440; 01.04.2020 DE 102020108980
(43) Veröffentlichungstag der Anmeldung: 22.09.2021
(73) Patentinhaber: RWE Offshore Wind GmbH, 45141 Essen (DE)
(72) Erfinder: Runge, Jörn, 31608 Marklohe (DE); Feltes, Christian, 44309 Dortmund (DE)
(74) Vertreter: Cohausz & Florack

(56) Entgegenhaltungen:
- EP-A1- 3 382 841
- WO-A1-2018/122405
- DE-A1- 102012 215 565
- DE-A1- 102016 106 215

## Beschreibung

Der Gegenstand betrifft ein Verfahren zum Bereitstellen von Regelleistung oder Regelreserveleistung in einem elektrischen Energieversorgungsnetz sowie eine Leitstelle in einem elektrischen Energieversorgungsnetz. Relevanter Stand der Technik wird durch folgende Dokumente gebildet:
DE 10 2012 215565 A1 (ENERGY & METEO SYSTEMS GMBH [DE]; EWE AG [DE]) 6. März 2014 (2014-03-06)
DE 10 2016 106215 A1 (WOBBEN PROPERTIES GMBH [DE]) 5. Oktober 2017 (2017-10-05)
EP 3 382 841 A1 (LICHTBLICK SE [DE]) 3. Oktober 2018 (2018-10-03)
WO 2018/122405 A1 (WOBBEN PROPERTIES GMBH [DE]) 5. Juli 2018 (2018-07-05)

Im europäischen Verbundnetz, welches in miteinander verbundene Teilnetze untergliedert ist, wird eine stabile Netzfrequenz bei 50Hz bereitgestellt. In anderen Versorgungsnetzen kann die Netzfrequenz eine andere sein, beispielsweise 60Hz in den USA. Verbundnetze werden durch Teilnetze gebildet, die über Koppelstellen miteinander verbunden sind. In jedem der Teilnetze ist die Netzfrequenz stabil zu halten. Da Lasten als auch Einspeiseleistungen in den Teilnetzen stark schwanken können, und somit die Netzfrequenz, ist Regelleistung bereitzustellen.

Regelleistung ist eine elektrische Leistung, die bei Frequenzschwankungen im Netz von einem oder mehreren Teilnehmern innerhalb vorgegebener zeitlicher Grenzen zur Verfügung gestellt werden muss. Teilnehmer sind z.B. Lasten und Einspeiser. Regelleistung kann auch in Form von mechanischer Schwungmasse zur Verfügung gestellt werden. Wenn hier von Regelleistung die Rede ist, so ist damit sowohl elektrische als auch mechanische Leistung gemeint, die bei Frequenzschwankungen zur Verfügung gestellt werden kann. In der Regel ist dabei Regelleistung über einen gewissen Zeitraum zur Verfügung zu stellen, sodass auch von Regelenergie gesprochen werden kann. Regelleistung kann einerseits unmittelbar am Teilnehmer frequenzgesteuert zur Verfügung gestellt werden, man spricht von Primärregelleistung. Darüber hinaus kann durch entsprechende Steuerbefehle angesteuert, innerhalb von Minuten, Regelleistung von verschiedenen Teilnehmern zur Verfügung gestellt werden, man spricht von Minutenreserve oder Sekundärregelleistung. Bevor bei konventionellen, direktgekoppelten Generatoren (Synchrongenerator) die Primärregelleistung eingreift, wirkt bei jeder Frequenzänderung die Schwungmasse des Generators inkl. Turbine (Turbosatz) frequenzstabilisierend. Diese natürliche Schwungmasse konventioneller Kraftwerke kann bei umrichtergekoppelten Generatoren und allen fernsteuerbaren Lasten künstlich erzeugt werden, was durch die schnellen Regelgeschwindigkeiten der Umrichter und der Lasten möglich ist. Das nennt man künstliche Schwungmasse und wird bei umrichtergekoppelten Generatoren und allen fernsteuerbaren Lasten ähnlich der Primärregelung bereitgestellt. Eine Form der Beschreibung der Schwungmasse kann auch Momentanreserve oder Anlaufzeitkonstante sein. Im Folgenden wird für alle möglichen Beschreibungsformen der Begriff Regelreserve genutzt. Man spricht auch von Primärregelleistungsreserve (Primärreserve und/oder Momentanreserve), welche positiv oder negativ sein kann.

Durch die Regelleistung wird sichergestellt, dass bei Ausfall von Netzkomponenten oder Teilnehmern im Netz, welche systemisch relevant sind, die Netzfrequenz innerhalb der vorgegebenen Grenzen stabil bleibt.

Eine maximal mögliche Einspeiseleistung eines Teilnehmers ist durch die bereitgehaltene Primärregelleistung begrenzt. Im europäischen Verbundnetz ist diese Primärreserve auf 3000 MW begrenzt. Dies leitet sich aus dem noch zu beherrschenden Ausfall von zwei Kraftwerken mit 1500 MW ab. Somit ist auch prinzipiell die maximale Einspeiseleistung eines Teilnehmers auf 15000 MW begrenzt. In Teilnetzen des europäischen Verbundnetzes und in diesen untergeordneten Versorgungsnetzen kann die maximal mögliche Einspeiseleistung eines Teilnehmers grundsätzlich noch darunter liegen. Dieselbe Beschränkung, die für Teilnehmer hinsichtlich ihrer Einspeiseleistung existiert, besteht dann prinzipiell auch für die Übertragungsleistung von Handelsleitungen, insbesondere von Verbindungsleitungen zwischen Teilnetzen. Diese dürftn ebenfalls nur Leistungen bis 1500MW übertragen, sodass bei einer Kappung der Teilnetze voneinander ein maximaler Leistungssprung von 1500MW entsteht, welcher in den Teilnetzen durch die dort vorhandene Regelleistung kompensiert werden muss.

Durch zunehmend größere Kraftwerke, insbesondere, insbesondere Offshore-Windparks oder Photovoltaikanlagen, kann die Grenze der maximal möglichen Einspeiseleistung, insbesondere von 1500MW oder 3000 MW in Zukunft überschritten werden. Es besteht dann ein Bedarf nach noch mehr Primärregelleistung.

Im Falle von neuen und erhöhten Transitleistungsflüssen entsteht weiterhin die Gefahr, dass bei Netztrennung im Bereich der Transitleitung sowohl im Netzgebiet der Überproduktion als auch im Netzgebiet der Unterproduktion die jeweilige Frequenzstabilität nicht mehr eingehalten werden kann. Ein Grund hierfür ist, dass in beiden Netzgebieten, insbesondere im Gebiet der Unterproduktion, nicht genügend Momentanreserve und/oder Primärreserve zur Verfügung steht. Dieses Risiko führt ebenfalls zu einer weiteren notwendigen Erhöhung der Momentanreserve und/oder Primärreserve.

Heutzutage ist es bereits möglich, Regelleistung manuell anzusteuern und bereitzuhalten. Da Regelleistung jedoch in der Regel nicht abgerufen wird, ist deren kontinuierliche Bereitstellung kostenintensiv. Darüber hinaus erfolgt in seltenen Fällen eine manuelle Veränderung, beispielsweise Erhöhung der Regelleistung auf Basis von kognitiven Risikoprognosen über die vermutete Netzbelastung oder Einspeiseleistung oder grundsätzlichen antizipierten Gefahrenlagen im Bereich der Computersicherheit und den damit vermuteten Stabilitätsproblemen und-risiken.Auch diese manuelle Regelung der Regelleistung führt häufig zu bereitgehaltener Regelleistung, die über dem tatsächlichen Bedarf liegt und somit ineffizient ist, insbesondere wenn die Reserve von gedrosselten regenerativen Einspeisern erbracht wird. Eine Erhöhung der bereitgehaltenen Regelleistung dauerhaft über den bisher etablierten Wert von z.B. 1500 MW wäre ebenfalls ineffizient, da diejenigen Situationen, in denen diese maximale Regelleistung tatsächlich abgerufen wird, eher sehr selten auftreten. Die bereitgehaltenen Ressourcen im Falle von Leistungsvorhaltung, insbesondere durch regenerative Einspeiser bleiben somit nahezu dauerhaft ungenutzt.

Zur Lösung dieses Problems schlägt die Erfindung ein Verfahren nach Anspruch 1 sowie eine Leitstelle nach Anspruch 13 vor.

Gemäß des Gegenstandes wird die notwendige Regelleistung, die auch als Regelreserve oder Momentanreserve verstanden werden kann, abhängig von gemessenen Größen innerhalb zumindest eines Teilnetzes des Energieversorgungsnetzes bestimmt. Dies ermöglicht eine automatisierte, situationsabhängige und auch eine dynamische Einstellung der bereitgehaltenen Regelleistung. Damit einher geht eine erhöhte Netzstabilität, da die bereitgehaltene Regelleistung an den jeweiligen Netzzustand oder Zustand des gesamten Energieversorgungssystems angepasst sein kann. Die Ressourcen zur Bereithaltung von Regelleistung werden optimiert bzw. nur wenn notwendig genutzt und die Systemeffizienz steigt. Es sei nochmals erwähnt, dass die Begriffe Regelreserve und Momentanreserve austauschbar verwendet werden. Auch kann unter Regelleistung eine elektrische und/oder eine mechanische Leistung verstanden werden. Insbesondere kann Regelleistung durch Einstellung eines elektrischen Parameters an einer Last und/oder einem Einspeiser und/oder eines mechanischen Parameters an einem Generator oder einer Last, insbesondere einer Schwungmasse verändert werden.

Zunächst wird vorgeschlagen, dass zumindest ein Parameter, der ein elektrischer oder mechanischer Parameter sein kann, in zumindest Teilen des Energieversorgungsnetzes für jeweils einen Zeitraum erfasst wird. Ein Parameter wird zu einem aktuellen Zeitpunkt und/oder in (für) einem aktuellen Zeitraum erfasst, insbesondere gemessen, prognostiziert, abgeschätzt oder per geeigneter State Estimation abgeschätzt. Der jeweilige aktuelle Zeitraum kann zeitlich nach dem Zeitpunkt der Erfassung liegen, insbesondere liegt der aktuelle Zeitraum unmittelbar nach der Erfassung. Ein aktueller Zeitraum, für den eine Erfassung relevant ist, kann zwischen 5min und mehreren Stunden oder gar einem oder mehreren Tagen dauern. Durch die Erfassung des elektrischen Parameters ist ein Zustand des Teils des Energieversorgungsnetzes zu einem bestimmten Zeitpunkt zumindest teilweise bekannt. Wenn nachfolgend die Rede davon ist, dass ein Parameter gemessen wird, so kann damit auch ein Erfassen im obigen Sinn gemeint sein.

Es wird auch vorgeschlagen, dass anschließend eine Regelleistung für den Teil des Energieversorgungsnetzes abhängig von dem erfassten zumindest einem Parameter für den jeweiligen Zeitraum insbesondere dynamisch bestimmt wird. Das heißt, dass nach jeweils einem Erfassungszeitpunkt und/oder Erfassungszeitraum der oder die Parameter ausgewertet werden und hieraus ein Netzzustand bestimmt wird. Aus diesem Netzzustand, insbesondere aus einer Kenntnis unterschiedlicher Netzparameter, kann für den Zeitraum bestimmt werden, wie groß eine Regelleistung sein muss, die bereitgehalten werden muss, um im Fall eines Ausfalls einer oder mehrerer Netzkomponenten, insbesondere unter Berücksichtigung des sogenannten N-1 oder N-2 Kriteriums, die Netzstabilität, insbesondere die Einhaltung der Netzfrequenz zu gewährleisten.

Durch die Erfassung ist bekannt, wie groß die Regelleistung oder Regelleistungsreserve für den Zeitraum sein muss. Um die Regelleistung auch tatsächlich bereithalten zu können, wird vorgeschlagen, dass zumindest ein Einstellparameter an einen Teilnehmer des Teils des Energieversorgungsnetzes übermittelt wird. Mit Hilfe des Einstellparameters kann der Teilnehmer so eingestellt werden, dass er zur Bereithaltung einer Regelleistung betrieben wird, mit der sich der Teilnehmer an einer Regelreserve für den Teil des Energieversorgungsnetzes beteiligt.

Zur Bereithaltung von Regelreserve wird auch vorgeschlagen, dass Momentanreserve geeignet vorgehalten wird. Hierbei kann die mitlaufende Schwungmasse der konventionellen Generatoren verändert (erhöht/verringert) werden, abhängig von den Einstellparametern, um im Falle einer zu Frequenzschwankung (zu niedrig/zu hoch) mechanische Leistung in elektrische Leistung wandeln zu können. Es kann sinnvoll sein, mehr oder weniger konventionelle Generatoren mitlaufen zu lassen, wenn die Einstellparameter eine entsprechende Netzsituation prognostizieren.

Ein Energieversorgungsnetz kann in Teilnetze unterteilt sein, die über Verbindungsleitungen und Koppelpunkte (Transitleitungen) miteinander verbunden sind. Über diese Verbindungsleitungen fließen Ausgleichsströme zwischen den Teilnetzen. Die Teilnetze können voneinander getrennt werden, wobei in den jeweiligen Teilnetzen die Netzfrequenz stets ebenfalls stabil zu halten ist. Eine Trennung der Teilnetze führt in einem exportierenden Netz zu einer abrupten Lastüberdeckung und in einem importierenden Netz zu einer abrupten Lastunterdeckung. Für ein jeweiliges Teilnetz ist jeweils eine teilnetzspezifische Regelreserve bereitzuhalten, die beim Ausfall von Komponenten innerhalb des Teilnetzes oder bei der Trennung des Teilnetzes von dem Rest des Verbundnetzes zur Verfügung gestellt werden muss, um die Netzfrequenz in dem Teilnetz stabil im vorgegebenen Frequenzbereich zu halten..

Teilnehmer in den Teilnetzen können Lasten als auch Einspeiser oder eine Kombination dieser, sogenannte Prosumer, sein. Einspeiser können insbesondere Kraftwerke zur Einspeisung elektrischer Leistung sein. Solche Kraftwerke können herkömmliche Kraftwerke, welche mit fossilen Brennstoffen betrieben werden, Kernkraftwerke oder Kraftwerke mit erneuerbaren Energien sein. Insbesondere Windkraftanlagen, vorzugsweise Windparks als auch Solarenergieanlagen, vorzugweise Solarparks werden über einen Netzanschluss mit dem Teilnetz verbunden. Auch solche Teilnehmer können zur Bereithaltung von Regelreserve herangezogen werden, insbesondere durch Ausnutzung von Schwungmasse (künstlich oder reale Schwungmasse) die im Falle einer Überlast z.B. elektrisch abgebremst oder grundsätzlich in Form von Leistungseinspeisung wirkt und im Falle einer Unterlast z.B. elektrisch angetrieben oder grundsätzlich in Form von Leistungsaufnahme wirkt.

Gemäß einem Ausführungsbeispiel wird vorgeschlagen, dass der Parameter ein Wert einer Netzfrequenz ist. Eine Netzfrequenz sollte in der Regel um ihren Sollwert, beispielsweise 50 Hz oder 60 Hz, insbesondere mit einer negativen Schwankungsbreite von maximal 1% bis 5%, bevorzugt 3% oder 1 Hz liegen und mit einer positiven Schwankungsbreite bis zu 10 oder 15% liegen.

Der Parameter kann darüber hinaus auch ein Phasenwinkel zwischen Strom und Spannung in einem Mehrphasennetz sein. Dieser Phasenwinkel kann Aufschluss über die kapazitive oder induktive Belastung des Netzes geben, woraus Rückschlüsse auf Netzzustand möglich sind.

Der Parameter kann darüber hinaus auch eine Spannungswinkeldifferenz zwischen Teilnetzen sein. Die Teilnetze sind über Koppelstellen miteinander verbunden. Die Spannungszeiger der einzelnen Phasen der Teilnetze können eine Winkeldifferenz aufweisen, die insbesondere zwischen 10° und 210° liegen kann. Die Spannungswinkeldifferenz kann z.B. ein Maß für den Unterschied der Erzeugerleistung zwischen verschiedenen Teilnetzen und damit der in den Teilnetzen benötigten Regelleistungsreserve sein.

Parameter können z.B. mit Wide-Area-Messsystemen gemessen werden. Um eine zeitliche Korrelation der Messwerte der elektrischen Parameter zu ermöglichen, können diese mittels Zeittrigger, beispielsweise GPS-Zeittrigger (Zeitstempel), Galileo-Zeittrigger (Zeitstempel), GLONASS-Zeittrigger (Zeitstempel) oder sonstigen Zeittriggern (Zeitstempeln) ausgelöst werden und so zeitlich miteinander korreliert werden, auch wenn die Messwerte an räumlich verschiedenen Positionen erfasst werden. Die Parameter können darüber hinaus mit Positionsinformationen versehen sein, um in einer Leitstelle einen Parameter einem Teilnetz zuordnen zu können.

In Teilnetzen, welche nach einer Trennung des Teilnetzes von dem Verbundnetz unabhängig betrieben werden, kann ebenfalls eine lokale Regelreserve notwendig sein, die vorzuhalten ist. Diese Regelreserve kann insbesondere auf Basis gemessener Spannungswinkeldifferenzen oder Leistungsflüssen zwischen möglichen Teilnetzen bestimmt werden.

Ein weiterer Parameter kann ein Maß für die Blind- als auch die Wirkleistung, insbesondere ein Phasenwinkel, innerhalb eines Teilnetzes sein. Auch kann eine Blind- und/oder Wirkleistungskomponente eines Teilnehmers an einem Anschlusspunkt des Teilnehmers an das Teilnetz gemessen werden. Auch ist der gesamte Blindleistungsbedarf von Netzen ein mögliches Maß für die benötigte Regelreserve in Teilnetzen, da der Blindleistungsbedarf mit zunehmenden Leistungsflüssen zunimmt.

Ein Parameter kann darüber hinaus eine Netzspannung an einem Messpunkt sein. Entlang eines Teilnetzes können Messpunkte an Anschlusspunkten von Teilnehmern oder getrennt davon angeordnet werden, mit denen die Spannung des Teilnetzes an dem Messpunkt erfasst werden kann. Über eine Mehrzahl von Messungen von Netzspannungen an räumlich verteilten Messpunkten lässt sich eine Aussage über die Belastung des Teilnetzes treffen. Insbesondere kann durch große Einspeiser, welche entlang von Versorgungssträngen eines Teilnetzes angeschlossen sind, eine erhebliche Bandbreite der Netzspannung entstehen, welche von einem zentralen Versorgungspunkt aus nicht erkennbar ist. Insbesondere der Abstand der Spannung zu einer kritischen Spannung, ab der eine Spannungsinstabilität möglich ist, kann ein Maß für die Regelreserve in dem betroffenen Teilnetz sein, da in Bereichen mit niedriger Spannung eher mit einem Erzeugerleistungsdefizit zu rechnen ist.

Das für die Netzspannung Gesagte kann ebenfalls für eine Stromstärke an einem Messpunkt gelten. Hier kann darüber hinaus auch eine Stromflussrichtung, sei es im Verbraucherzählfallsystem oder im Erzeugerzählfallsystem, bestimmt werden.

Durch die entsprechende Messung von Strom und Spannung sowie der Stromflussrichtung, lassen sich auch Leistungsflüsse innerhalb eines Teilnetzes als elektrischer Parameter bestimmen.

Darüber hinaus kann auch eine Einspeiseleistung eines Teilnehmers an seinem Anschlusspunkt als Parameter gemessen werden.

Der Parameter kann darüber hinaus auch eine wirksame natürliche und/oder künstliche Schwungmasse sein. Abhängig von dieser Schwungmasse kann eine Momentanreserve bestimmt werden. Durch Hinzunahme von ans Netz angeschlossener natürlicher und/oder künstliche Schwungmasse kann die Momentanreserve erhöht werden.

Der Parameter kann darüber hinaus auch ein maximaler Übertragungswinkel (Phasenwinkel zwischen zwei Knotenspannungen des Netzes oder zwischen konventionellen Kraftwerken und deren Netzeinspeiseknoten) sein.

Der Parameter kann darüber hinaus auch minimale und/oder maximale Spannungsamplituden und/oder Stabilitätsreserve an Netzknoten umfassen. Dies kann insbesondere in Bezug auf die Spannungsstabilität von Netzen und Netzbereichen relevant sein.

Der Parameter kann darüber hinaus auch eine Stabilitätsreserve und/oder maximal zulässige Kurzschlussdauer in Bezug auf die transiente Stabilität von Netzen oder konventionellen Kraftwerksgeneratoren umfassen.

Der Parameter kann darüber hinaus auch eine Stabilitätsreserve und/oder einen Polradwinkel in Bezug auf die statische Stabilität von Netzen oder konventionellen Kraftwerksgeneratoren umfassen.

Der Parameter kann darüber hinaus auch eine Oberschwingungsamplitude von Spannung und Strom umfassen.

Der Parameter kann darüber hinaus auch einen Blindleistungsbedarf des Netzes umfassen.

In Bezug auf die allgemeine Computersicherheit kann ein Parameter genutzt werden der die Kritikalität eine IT-Sicherheitsgefahrenlage wiederspiegelt. Die Kritikalität eine IT-Sicherheitsgefahrenlage spiegelt dabei sowohl die Wahrscheinlichkeit als auch Schwere eines IT Problems wider, welches Einfluss auf die Systemstabilität im Allgemeinen und auf die Frequenzstabilität im Speziellen haben kann. Mögliche Beispiele von IT-Gefahren für das Energieversorgungssystems sind z.B. Computerviren in den Computern der Netzleitstellen oder Kraftwerksleistellen.

Die Parameter können unabhängig voneinander an verschiedensten Punkten innerhalb eines Teilnetzes erfasst werden. Die Parameter können elektrische und/oder mechanische Parameter sein.

Die erfassten Werte können insbesondere mit Zeitstempeln versehen an eine Leitstelle oder an einen zentralen Rechner übermittelt werden und dort kann eine das Netz charakterisierende Größe berechnet werden, aus der sich die Größe der bereitzuhaltenden Regelleistung für das Teilnetz zumindest in Teilen bestimmen lässt.

Die charakterisierende Größe kann ein Leistungsfluss, eine maximale Leistungsänderung oder eine für die Stabilität des aktuellen oder zukünftigen Elektroenergiesystems charakteristische Größe sein. Für die Stabilität des aktuellen oder zukünftigen Elektroenergiesystems charakteristische Größen können dabei unter anderem sein:
- maximaler Übertragungswinkel (Phasenwinkel zwischen zwei Knotenspannungen des Netzes oder zwischen konventionellen Kraftwerken und deren Netzeinspeiseknoten),
- minimale und maximale Spannungsamplituden oder Stabilitätsreserve an Netzknoten, auch in Bezug auf die Spannungsstabilität von Netzen und Netzbereichen,
- Stabilitätsreserve oder maximal zulässige Kurzschlussdauer in Bezug auf die transiente Stabilität von Netzen oder konventionellen Kraftwerksgeneratoren
- Stabilitätsreserve oder Polradwinkel in Bezug auf die statische Stabilität von Netzen oder konventionellen Kraftwerksgeneratoren
- Oberschwingungsamplitude von Spannung und Strom
- Blindleistungsbedarf des Netzes

Die erfasste Werte können neben dem Zeitstempel auch eine Ortsinformation enthalten. Unter Verwendung dieser Ortsinformation können empfangene Werte jeweils einem Teilnetz zugeordnet werden, sodass die Summe von einer Mehrzahl, vorzugsweise aller Messwerte eines jeweiligen Teilnetzes zu einem Zeitpunkt berücksichtig werden können, um den Netzzustand dieses Teilnetzes bestimmen zu können.

Gemäß einem Ausführungsbeispiel wird vorgeschlagen, dass der Parameter zumindest ein Differenzial des erfassten Wertes ist. Für jeweils einen Zeitpunkt wird ein Wert erfasst. Es ist möglich, dass ein Erfassungszeitpunkt vielmehr ein Erfassungszeitraum ist und in diesem eine Reihe von Werten erfasst werden, um eine Tendenz, insbesondere eine Bewegungsrichtung des Wertes zu bestimmen. Auch ist es möglich, dass die Reihe von mehreren Werten von verschiedenen Zeitpunkten der verschiedenen Zeiträume erfasst werden, insbesondere dass Werte von aufeinander folgenden Zeiträumen genutzt werden, um das Differenzial des Wertes zu bestimmen. Durch die Bestimmung des Differenzials des Wertes lässt sich eine Tendenz des Wertes bestimmen und abhängig von dieser Tendenz kann eine Regelleistung, beispielsweise mit einer Sicherheitsreserve versehen sein, da in Kenntnis der Tendenz auf einen zukünftigen Parameter geschlossen werden kann.

Gemäß einem Ausführungsbeispiel wird vorgeschlagen, dass die Regelleistung Primärregelleistung oder Sekundärregelleistung ist. Wie bereits erwähnt, kann darunter einer Primärreserve, eine Sekundärreserve und/oder eine Momentanreserve verstanden werden. Insbesondere kann die Regelleistung elektrisch und/oder elektromechanisch, insbesondere unter Verwendung von Schwungmassen in Generatoren oder mit Umrichter angeschlossenen Lasten oder Erzeugern erbracht werden. Primärregelleistung, auch Sekundenreserve genannt, wird unmittelbar an einem Teilnehmer, welcher Regelleistung zur Verfügung stellt, bei Messung einer Abweichung der Netzfrequenz um einen Grenzwert bereitgestellt. Sekundärregelleistung, auch Minutenreserve genannt, kann durch einen Übertragungsnetzbetreiber durch Kommunikation mit dem Teilnehmer dort abgerufen werden. Sowohl Primärregelleistung als auch Sekundärregelleistung muss insbesondere bei regenerativen Einspeisern bereitgehalten bzw. vorgehalten werden, so dass im Fall der Notwendigkeit der Bereitstellung der Regelleistung der Teilnehmer die entsprechende Leistung innerhalb der vorgegebenen Zeitgrenzen zur Verfügung stellen kann. Die Regelleistung kann sowohl eine Einspeiseleistung als auch eine Last sein.

Gemäß einem Ausführungsbeispiel wird vorgeschlagen, dass der Einstellparameter eine Veränderung einer aktuellen Leistung eines Teilnehmers zur Bereithaltung von Regelleistung bestimmt, insbesondere dass der Einstellparameter eine Drosselung einer aktuellen Einspeiseleistung eines Teilnehmers bestimmt. Ein Teilnehmer kann mit einer aktuellen maximalen Einspeiseleistung elektrische Leistung in das Energieversorgungsnetz einspeisen.

Hat der Teilnehmer eine Grundleistung, welche er in dem Zeitraum stets zur Verfügung stellen kann, so kann stets eine Drosselung bis zu dem Betrag dieser Leistung in dem Zeitraum erfolgen. Somit kann der Teilnehmer, wenn er sicherstellen kann, dass er zu jedem Zeitpunkt innerhalb des Zeitraums die Grundleistung bereitstellt, auch um den entsprechenden Betrag der Leistung gedrosselt werden.

Durch diese Drosselung kann bei Überfrequenz eine Netzstabilisierung erreicht werden.

Andererseits kann es auch sinnvoll sein, bei einer Netzunterfrequenz elektrische Leistung in das Teilnetz einzuspeisen. Ist bekannt, dass ein Teilnehmer für den Zeitraum eine Grundleistung stets zur Verfügung stellen kann, so kann der Einstellparameter auch eine Drosselung der in dem Zeitraum aktuell eingespeisten Leistung beinhalten. Das heißt, dass während des Zeitraums der Teilnehmer potentiell mehr Leistung einspeisen könnte, als er dies tut. Wird Regelleistung abgerufen, kann diese Drosselung der Leistung aufgehoben werden und der Teilnehmer kann die Differenz aus der aktuell angedrosselten Leistung und seiner Grundleistung als Regelleistung dem Teilnetz zur Verfügung stellen.

Gemäß einem Ausführungsbeispiel wird vorgeschlagen, dass die Regelleistung diskret oder kontinuierlich proportional zu zumindest dem einen Parameter bestimmt wird. Dabei ist es möglich, abhängig von zumindest dem einen Parameter Stufen von Regelleistung zu definieren. So ist es beispielsweise möglich, Regelleistung in 0,1, 1, 10MW-Stufen zu definieren, welche durch die Teilnehmer abhängig von den Einstellparametern bereitzuhalten sind. Auch kann die Regelleistung kontinuierlich abhängig von zumindest dem einen Parameter sein, sodass für jeden Teilnehmer gegebenenfalls eine individuelle Regelleistung definiert wird, die er bereitzuhalten hat.

Gemäß einem Ausführungsbeispiel wird vorgeschlagen, dass die Regelgröße für die Regelleistung eine diskrete Anzahl von konventionellen Kraftwerken oder Turbosätzen im Leerlauf oder Phasenschieberbetrieb ist. Durch die Variation der Masse, die im Betrieb in Bewegung ist, kann eine Momentanreserve variiert werden.

Gemäß einem Ausführungsbeispiel wird vorgeschlagen, dass die Regelung einen Tausch von Einspeiseleistung ohne natürliche Schwungmasse durch Einspeiseleistung mit natürlicher und/oder künstlicher Schwungmasse beinhaltet. Wird eine Variation der Regelleistung verlangt, so kann eine Einspeiseleistung ohne Schwungmasse (z.B. eine PV Anlage oder eine Batterie) durch eine Einspeiseleistung mit Schwungmasse ausgetauscht werden. Durch die Schwungmasse wird mechanische Bewegungsenergie gespeichert, die ggf. in elektrische Energie umgewandelt werden kann oder elektrische Energie kann aufgenommen und in mechanische Bewegungsenergie umgewandelt werden.

Gemäß einem Ausführungsbeispiel wird vorgeschlagen, dass der Einstellparameter eine Abwurfleistung des Teilnehmers bestimmt. Große Lasten innerhalb eines elektrischen Versorgungsnetzes belasten dieses erheblich. Bei großen Lasten ist es jedoch möglich, kurzfristig zumindest Teile davon am Anschlusspunkt des Teilnehmers abzuwerfen, so dass die Netzlast absinkt. Durch ein Absinken der Last kann eine Frequenzstabilisierung nach oben erfolgen. Auch durch eine Hinzunahme von Lasten kann im Falle eines Frequenzanstiegs diesem entgegen gewirkt werden. Dies kann eine negative Abwurfleistung sein.

Gemäß einem Ausführungsbeispiel wird vorgeschlagen, dass der Parameter basierend auf Prognosen extrapoliert wird. Der Parameter wird zu einem Zeitpunkt, bevorzugt vor Beginn des Zeitraums gemessen. In Kenntnis von historischen Werten, Datumsinformationen oder sonstiger Informationen, die relevant für diesen Parameter sein können, kann basierend auf dem aktuellen gemessenen elektrischen Parameter eine Prognose für die Veränderung des Parameters in Zukunft erstellt werden. In Zukunft liegt der Zeitraum, für den der Parameter maßgeblich ist, um die Regelleistung zu bestimmen, die in diesem Zeitraum bereitzuhalten ist. Durch die Prognose kann die bereitzuhaltende Regelleistung genauer definiert werden.

Wie bereits erläutert, kann die Prognose auf historischen Daten beruhen. Auch ist es möglich, dass die Prognose auf Wetterprognosen beruht. So kann ein Parameter abhängig von einer Wetterprognose prognostiziert werden. Insbesondere in Zeiten von besonders hohen oder besonders niedrigen Temperaturen ist die Wärme-/Kälteerzeugung im häuslichen Umfeld ein relevanter Faktor für die Leistungsaufnahme eines Teilnehmers. Dies gilt insbesondere für Regionen, in denen großflächig elektrische Klimageräte installiert sind. Durch diese Information zu der möglichen Leistungsaufnahme von Teilnehmern und somit die Netzlast kann der Einstellparameter und mithin die bereitzuhaltende Regelleistung genauer definiert werden.

Gemäß einem Ausführungsbeispiel wird vorgeschlagen, dass die Teilnehmer eine Bereithaltung von Regelleistung abhängig von dem Einstellparameter kommunizieren. Die Teilnehmer empfangen Einstellparameter von einem entfernten Rechner, beispielsweise einer Leitstelle oder einem sonstigen Rechner. Mit Hilfe dieser Einstellparameter sollen die Teilnehmer so eingestellt werden, dass sie eine entsprechende Regelreserve bereithalten. Ob die Teilnehmer tatsächlich entsprechend eingestellt wurden und somit für den Zeitraum die benötigte Regelreserve tatsächlich bereitgehalten wird, kann in dem zentralen Rechner nur dann bestätigt werden, wenn die Teilnehmer die Bereithaltung der Regelleistung kommunizieren und insbesondere bestätigen oder zumindest teilweise ablehnen. Der Rechner empfängt Informationen darüber, ob und in welcher Höhe die Teilnehmer abhängig von dem Einstellparametern Regelleistung bereithalten.

Gemäß einem Ausführungsbeispiel wird vorgeschlagen, dass ein Leistungsfluss von einem ersten Teilnetz in ein zweites Teilnetz ermittelt oder prognostiziert wird und dass Einstellparameter an alle einspeisenden Teilnehmer des ersten Teilnetzes übermittelt werden, derart, dass die Einstellparameter eine Bereitstellung einer Regelleistung der Teilnehmer bewirken.

Dabei wird vorgeschlagen, dass die positive oder negative Primärregelleistungsreserve (Primärreserve und/oder Momentanreserve) dem gemessenen, bestimmten oder prognostizierten Leistungsfluss zwischen Teilnetzen oder Leistungsimport oder -export eines Teilnetzes in einem Bereich von 10 - 200 %, insbesondere in einem Bereich von 50 - 150% oder 70 - 130% entspricht.

Auch wird vorgeschlagen, dass ein gemessener, bestimmter oder prognostizierter Mindestleistungsfluss zwischen Teilnetzen oder Leistungsimport oder -export eines Teilnetzes größer als 50 MW ist, damit dafür eine Primärregelleistungsreserve angepasst oder bereitgestellt wird Ein solches Totband ist für alle Parameter gemäß Anspruch 2 möglich, um den Eingriff in die Lasten und Erzeuger des Energieversorgungssystems zu minimieren bzw. nur sachgerecht auszulösen.

Bei einem Leistungsfluss von einem ersten in ein zweites Teilnetz importiert eines der Teilnetze elektrische Leistung aus dem anderen Teilnetz. Das heißt, dass in dem exportierenden Teilnetz die Erzeugungsleistung höher ist als die Verbrauchsleistung und in dem importierenden Teilnetz die Erzeugungsleistung geringer ist als die Verbrauchsleistung. Ist ein solcher Leistungsfluss bekannt, können beispielsweise Verbraucher in dem importierenden Teilnetz Regelleistung durch Lastabwurf bereithalten. Werden die Verbraucher in dem importierenden Teilnetz, die sich an der Regelreserve beteiligen könnten, über die Einstellparameter darüber informiert, dass sie im Falle der Bereithaltung von Regelleistung Last abwerfen müssen, kann im Falle einer Netztrennung das importierende Netz durch Lastabwurf stabilisiert werden. Somit kann ein Einstellparameter einen Lastabwurf eines Teilnehmers zur Bereithaltung von Regelleistung indizieren.

Ist der Leistungsfluss bekannt, können beispielsweise Verbraucher in dem exportierenden Teilnetz Regelleistung durch Leistungsreduktion bereithalten. Werden die Einspeise in dem exportierenden Teilnetz, die sich an der Regelreserve beteiligen könnten, über die Einstellparameter darüber informiert, dass sie im Falle der Bereithaltung von Regelleistung Leistung reduzieren müssen, kann im Falle einer Netztrennung das exportierende Netz durch Reduktion der Einspeiseleistung stabilisiert werden. Somit kann ein Einstellparameter eine Reduktion der Einspeiseleistung eines Teilnehmers zur Bereithaltung von Regelleistung indizieren.

Ein weiterer Aspekt ist eine Leitstelle nach Anspruch 12.

Empfangsmittel können Receiver oder Modems sein, mit denen drahtgebunden oder drahtlos Daten empfangen werden können. Die elektrischen Parameter können geeignet kodiert an die Leitstelle übermittelt werden und mit den Empfangsmitteln empfangen werden.

Rechenmittel können Prozessoren, Mikroprozessoren, digitale Signalprozessoren oder dergleichen sein, mit denen aus den empfangenen Messwerten Einstellparameter errechnet werden können. Die Einstellparameter können basierend auf dynamisch bestimmten Regelleistungen bestimmt werden. Die Rechenmittel können durch geeignete Verarbeitung der empfangenen Daten zunächst die notwendige Regelleistung bestimmen und daraus Einstellparameter für einzelne Teilnehmer ableiten.

Die ermittelten Einstellparameter können mit Sendemitteln an die Teilnehmer übermittelt werden.

Sendemittel können Transmitter oder Modems sein, mit denen drahtgebunden oder drahtlos Daten gesendet werden können. Die Einstellparameter können geeignet kodiert von der Leitstelle an die Teilnehmer übermittelt werden und dort empfangen werden.

Gemäß einem Ausführungsbeispiel wird vorgeschlagen, dass die elektrischen Parameter in den Empfangsmitteln gemäß IEC60870 und/oder IEC61850 kodiert empfangen werden. Die Sendemittel übertragen die Einstellparameter ebenfalls gemäß IEC60870 und/oder IEC61850 kodiert an die Teilnehmer, die sich an der Bereithaltung von Regelleistung beteiligen.

Nachfolgend wird der Gegenstand anhand einer Ausführungsbeispiele zeigenden Zeichnung näher erläutert. In der Zeichnung zeigen:
- Fig. 1: eine Struktur eines Energieversorgungsnetzes;
- Fig. 2a-e: verschiedene elektrische Parameter;
- Fig. 3: die Bestimmung einer Regelleistung abhängig von zumindest einem Parameter;
- Fig. 4a, b: die Drosselung von Teilnehmern zur Bereithaltung von Regelenergie.

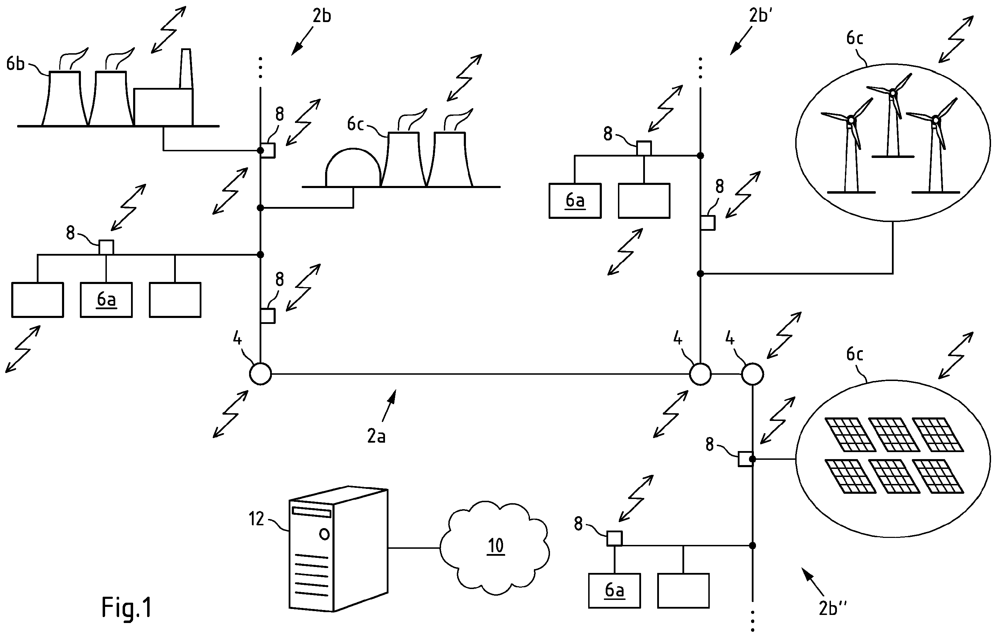

Fig. 1 zeigt ein Energieversorgungnetz 2. Das Energieversorgungsnetz 2 ist aus einem Verbundnetz 2a mit Teilnetzen 2b-2b" gebildet. Die Teilnetze 2b-2b" sind über Koppelpunkte 4 miteinander vernetzt. In den jeweiligen Teilnetzen 2b sind Teilnehmer 6a-c angeschlossen. Ein Teilnehmer 6 kann als Last oder als sogenannter Prosumer, das heißt als Einspeiser und als Last sein, ein Teilnehmer 6b kann als Last betrieben sein und ein Teilnehmer 6c kann als Einspeiser betrieben sein.

In den jeweiligen Teilnetzen 2b-2b" sind die Teilnehmer über Verteilstränge miteinander und einem Koppelpunkt 4 verbunden. Entlang der Teilstränge der Teilnetze 2b-2b" sind Messpunkte 8 angeordnet. Die Messpunkte 8 sind rein beispielhaft gezeigt. Die Anordnung der Messpunkte 8 erfolgt zur Überwachung eines jeweiligen Teilnetzes 2b-2b" und zur Erfassung der elektrischen Parameter. Die Messpunkte 8 sind drahtlos oder drahtgebunden in Kommunikation über ein Weitverkehrsnetz 10 mit einer Leitstelle 12 verbunden. Die Kommunikation ist durch die Pfeile in der Fig. 1 angedeutet.

Eines oder mehrere der Teilnetze 2b-2b" kann als exportierendes Netz gebildet sein. In diesem Fall fließt über einen Koppelpunkt 4 elektrische Leistung von dem exportierenden Teilnetz 2b-2b" in das Verbundnetz 2a und von dort in ein importierendes Teilnetz 2b-2b".Besteht ein Leistungsfluss über einen Koppelpunkt 4 von einem der Teilnetze 2b-2b"in das Verbundnetz 2a, ist ein entsprechendes Teilnetz 2b-2b" ein exportierendes Netz. Besteht ein Leistungsfluss über einen Koppelpunkt 4 von dem Verbundnetz 2a in eines der Teilnetze 2b-2b" ist ein entsprechendes Teilnetz 2b-2b" ein importierendes Netz.

Über die Koppelpunkte 4 können die Teilnetze 2b-2b" von dem Verbundnetz 2a getrennt werden. Sowohl im Verbundbetrieb als auch im getrennten Betrieb ist eine Netzstabilisierung durch Bereitstellung von Regelleistung/Regelenergie notwendig. Diese wird mit Hilfe des gegenständlichen Verfahrens bereitgestellt.

Dabei können die Teilnehmer 6a-c über entsprechende Einstellparameter dynamisch abhängig von gemessenen Netzparametern, die an den Messpunkten 8 gemessen wurden, zur Bereithaltung von Regelleistung eingestellt werden. Im Falle einer Netzinstabilität, das heißt im Falle einer Frequenzabweichung von einer Normfrequenz um einen gewissen Betrag, beispielsweise 1% bis 5%, bevorzugt 3%, kann an den Einspeisepunkten der Teilnehmer 6a-c, die für die Bereithaltung von Primärregelleistung eingestellt sind, unmittelbar Primärregelleistung zur Verfügung gestellt werden. Dies kann positive oder negative Leistung sein, je nachdem, in welche Richtung eine Frequenzabweichung vorliegt. Darüber hinaus können die Teilnehmer von der Leitstelle 12 über das Weitverkehrsnetz 10 angesteuert werden, um Primär oder Sekundärregelleistung zur Verfügung zu stellen oder als Reserve bereitzustellen. Das Weitverkehrsnetz kann das Internet, ein Intranet, Richtfunk oder Signale über das Energieversorgungsnetz wie z.B. Rundsteuersignale beinhalten. Diese Sekundärregelleistung muss in der Regel nicht unmittelbar sondern nach wenigen Minuten einer Frequenzabweichung zur Verfügung gestellt werden.

Zur Einstellung der Teilnehmer 6a-c ist gegenständlich eine Erfassung von Parametern notwendig. Diese werden unter anderem an den Messpunkten 8, jedoch auch an Netzanschlusspunkten der Teilnehmer 6a-c an die Teilnetze 2b-2b" oder in den Teilnehmern 6a-c unmittelbar gemessen.

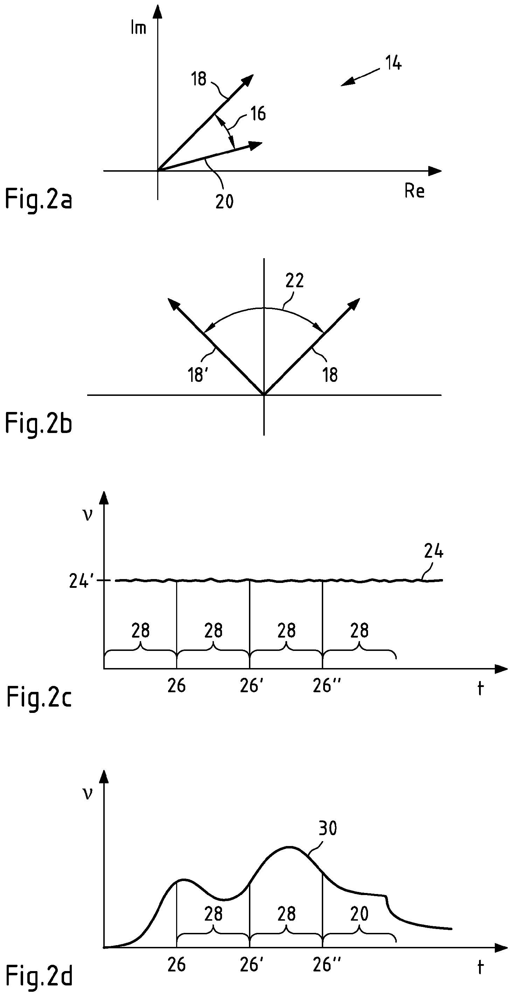

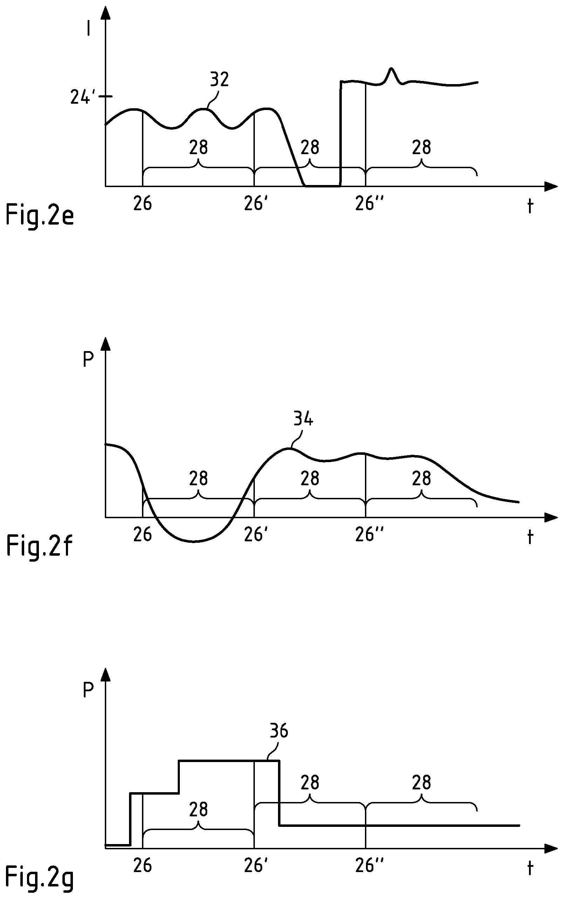

Fig. 2a zeigt beispielhaft einen ersten Parameter in einem Zeigerdiagramm 14. Der erste Parameter kann ein Phasenwinkel 16 zwischen einem Zeiger einer gemessenen Spannung 18 und einem Zeiger einer gemessenen Stromstärke 20 sein.

Ein weiterer Parameter kann gemäß Fig. 2b eine Spannungswinkeldifferent 22 zwischen einem Zeiger einer gemessenen Spannung 18 in einem ersten Teilnetz 2b-2b" und einem Zeiger einer gemessenen Spannung 18' in einem zweiten Teilnetz 2b-2b" oder dem Verbundnetz 2a sein. Im Falle einer Netztrennung an den Koppelpunkten 4 können die Spannungen einen Phasenversatz haben, der durch die Spannungswinkeldifferenz 22 ausgedrückt werden kann. Eine solche Spannungswinkeldifferenz kann beispielsweise zwischen 10° und 120° betragen.

Ein weiterer Messwert kann eine Netzfrequenz 24 sein, die über die Zeit gemessen wird und in der Regel um einen Sollwert 24', beispielsweise 50 Hz oder 60 Hz schwankt.

Es können zu Zeitpunkten 26-26" jeweils zu Beginn eines Zeitraums 28 oder zum Ende eines Zeitraums 28 eine Messung des entsprechenden Parameters erfolgen. Dies ist auch in den nachfolgenden Fig. 2d-e gezeigt.

Ein weiterer Parameter kann ein zeitlicher Verlauf der Spannung 18 an einem Messpunkt 8 über die Zeit sein. Dies ist in der Fig. 2d dargestellt.

Ein weiterer Parameter kann ein zeitlicher Verlauf der Stromstärke 20 und/oder eine Stromflussrichtung an einem Messpunkt 8 gemäß der Fig. 2e sein.

Darüber hinaus kann eine Leistung 34 über die Zeit gemäß der Fig. 2f an einem Koppelpunkt 4 oder einem Messpunkt 8 gemessen werden.

Darüber hinaus kann an einem Teilnehmer 6a-c dessen Einspeiseleistung 36 gemäß der Fig. 2e über die Zeit gemessen werden.

Neben diesen elektrischen Parametern können natürlich auch noch weitere Parameter, die einen Aufschluss über den Netzzustand erlauben, gemessen werden. Geeignete Messgeräte und Messverfahren sind hinlänglich bekannt und werden daher nicht näher erläutert.

Die Parameter können zu den Zeitpunkten 26-26" oder um die Zeitpunkte 26-26" herum erfasst werden. Insbesondere kann eine Reihe von Parametern erfasst werden und hieraus eine Ableitung des Parameters bestimmt werden. Dies ermöglicht eine Trendanalyse des entsprechenden Parameters. Auch ist eine Trendanalyse des Parameters durch die Reihe der Messwerte zu den Zeitpunkten 26-26" möglich. Anhand der aktuellen Messwerte als auch der Trendanalysen kann eine notwendige Regelleistungsreserve dynamisch bestimmt werden.

Ein Trend eines elektrischen Parameters lässt sich darüber hinaus auch über historische Daten ermitteln. So kann ausgehend von einem Messwert zu einem Zeitpunkt 26 unter Kenntnis von historischen Entwicklungen des Parameters eine Prognose darüber gestellt werden, wie sich der Parameter innerhalb des Zeitraums 28 nach dem Zeitpunkt 26 verändert. In diese Prognose kann auch eine Wetterprognose einfließen.

Wie in der Fig. 1 zu erkennen ist, sind Einspeiser 6c vorgesehen, die beispielsweise Windkraftanlagen oder Fotovoltaikanlagen sein können. Beide Einspeiser 6c erneuerbarer elektrischer Energie sind stark wetterabhängig, so dass Prognosen über Sonneneinstrahlung oder Windgeschwindigkeiten die Bestimmung der Parameter innerhalb der Zeiträume 28 verbessert.

Basierend auf den Messwerten als auch der Prognosen der Parameter kann eine notwendige Regelleistung für den Zeitraum 28 bestimmt werden und den Teilnehmern kommuniziert werden.

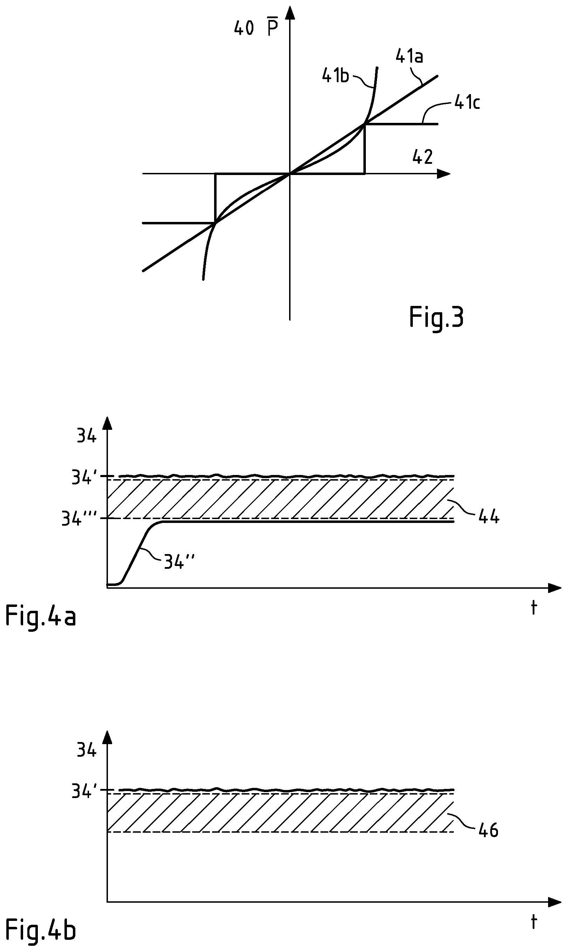

Fig. 3 zeigt beispielhaft eine Kennlinie zur Bestimmung einer Regelleistung 40 abhängig von einen aus einem oder mehreren Parametern bestimmten Vektor 42.

In der Fig. 3 ist ein lediglich zweidimensionale Kennlinie dargestellt, diese kann jedoch n-dimensional abhängig von der Anzahl der Parameter sein. Eine Kennlinie entsprechend der Fig. 3 kann für jeweils einen Teilnehmer und/oder einen Parameter oder eine Gruppe unterschiedlichster Parameter festgelegt werden und abhängig von der Kennlinie kann eine Regelleistung 40 einem Teilnehmer 6a-c kommuniziert werden, welche der Teilnehmer für den Zeitraum 28 bereithalten muss. Im Falle der Netzinstabilität, also wenn Regelleistung notwendig ist, stellt der Teilnehmer 6a-c die bereitgehaltene Regelleistung an seinem Anschlusspunkt zur Verfügung, um das Netz zu stabilisieren. Die Kennlinie kann eine lineare Regelung (41a) oder eine nicht lineare Regelung (41b) umfassen. Auch kann in der Kennlinie ein Totband hinterlegt sein (41c), in dem keine Regelung erfolgt.

Eine Möglichkeit der Bereitstellung von Regelleistung kann eine Androsselung eines Teilnehmers sein, so dass dieser in dem Zeitraum 28 mit einer verminderten Leistung betrieben wird. Dies ist beispielhaft in der Fig. 4a gezeigt. In der Fig. 4a ist zu erkennen, dass eine Leistung 34 eines Teilnehmers über den Zeitraum 28 in einer Prognose um einen Leistungswert schwankt, die Leistung in dem Zeitraum 28 jedoch nicht unter eine obere Grenze 34' fällt. Um positive Regelleistung von einem entsprechenden Teilnehmer abrufen zu können, kann der Einstellparameter den Teilnehmer instruieren, seine tatsächlich zur Verfügung gestellte Leistung 34" nur bis zu einem unteren Grenzwert 34‴ zur Verfügung zu stellen und die Differenz 44 zwischen dem unteren Grenzwert 34‴ und dem oberen Grenzwert 34'steht als Regelleistung zur Verfügung. Der Teilnehmer kann seine eingespeiste Leistung im Falle der Regelleistungserbringung bis zu dem Wert 34' erhöhen.

Auch eine negative Regelleistung kann bereitgehalten werden, wie in der Fig. 4b gezeigt. In der Fig. 4b kann der gleiche Teilnehmer wie gemäß der Fig. 4a eine Leistung 34 über einen Zeitraum 28 erbringen. Wenn feststeht, dass der Teilnehmer in dem Zeitraum 28 stets eine größere Leistung zur Verfügung stellt als die notwendige angedrosselte Leistung 46, kann der Einstellparameter bewirken, dass der Teilnehmer im Fall der Regelleistungserbringung die eingespeiste Leistung 34 um den Wert der Drosselung 46 reduziert.

Auch können Teilnehmer 6a-c von dem Netz 2b-2b" getrennt werden.

Somit ist es möglich, dass Teilnehmer, insbesondere Einspeiser, die im Netzbetrieb zur Frequenzinstabilität beitragen können, durch Messung von Parametern, insbesondere deren Einspeiseleistung, automatisch Teil der Regelreserve werden.

### Bezugszeichenliste

- 2: Energieversorgungsnetz
- 2a: Verbundnetz
- 2b-b": Teilnetz
- 4: Koppelpunkt
- 6a: Prosumer
- 6b: Last
- 6c: Einspeiser
- 8: Messpunkt
- 10: Weitverkehrsnetz
- 12: Leitstelle
- 14: Zeigerdiagramm
- 16: Phasenwinkel
- 18: Spannung
- 20: Stromstärke
- 22: Spannungswinkeldifferenz
- 24: Netzfrequenz
- 26: Zeitpunkt
- 28: Zeitraum
- 34: Leistung
- 36: Einspeiseleistung
- 40: Regelleistung
- 42: Vektor
- 44: Differenz
- 46: Drosselung

## Patentansprüche

1. Verfahren zum Bereitstellen von Regelleistung und/oder Regelleistungsreserve in einem elektrischen Energieversorgungsnetz umfassend:
- Erfassen zumindest eines Parameters in zumindest Teilen des Energieversorgungsnetzes für jeweils einen Zeitraum und Bestimmen eines Netzzustandes aus dem zumindest einen Parameter für den Zeitraum,
- Bestimmen einer bereitzuhaltenden Regelleistung für den Teil des Energieversorgungsnetzes abhängig von dem Netzzustand für den jeweiligen Zeitraum,
- Übermitteln zumindest eines Einstellparameters an einen Teilnehmer des Teils des Energieversorgungsnetzes zur Bereithaltung einer Regelleistung, mit der sich der Teilnehmer an einer Regelreserve für den Teil des Energieversorgungsnetzes beteiligt.

2. Verfahren nach Anspruch 1,
**dadurch gekennzeichnet,**
- **dass** der Parameter zumindest einen Wert aus der Gruppe:
a) Netzfrequenz;
b) Phasenwinkel;
c) Spannungswinkeldifferenz zwischen Teilnetzen;
d) Blind - und/oder Wirkleistung;
e) Netzspannung am Messpunkt;
f) Leistungsfluss;
g) Stromstärke am Messpunkt;
h) Einspeiseleistung zumindest eines Teilnehmers;
i) wirksame natürliche und künstliche Schwungmasse
j) maximaler Übertragungswinkel (Phasenwinkel zwischen zwei Knotenspannungen des Netzes oder zwischen konventionellen Kraftwerken und deren Netzeinspeiseknoten),
k) minimale und maximale Spannungsamplituden oder Stabilitätsreserve an Netzknoten, auch in Bezug auf die Spannungsstabilität von Netzen und Netzbereichen,
l) Stabilitätsreserve oder maximal zulässige Kurzschlussdauer in Bezug auf die transiente Stabilität von Netzen oder konventionellen Kraftwerksgeneratoren
m) Stabilitätsreserve oder Polradwinkel in Bezug auf die statische Stabilität von Netzen oder konventionellen Kraftwerksgeneratoren
n) Oberschwingungsamplitude von Spannung und Strom
o) Blindleistungsbedarf des Netzes
p) Kritikalität eine IT-Sicherheitsgefahrenlage
umfasst.

3. Verfahren nach Anspruch 1 oder 2,
**dadurch gekennzeichnet,**
- **dass** der Parameter zumindest ein Differential des erfassten Wertes ist.

4. Verfahren nach einem der vorangehenden Ansprüche,
**dadurch gekennzeichnet,**
- **dass** die Regelleistung eine Primärregelleistung und/oder eine Sekundärregelleistung ist.

5. Verfahren nach einem der vorangehenden Ansprüche,
**dadurch gekennzeichnet,**
- **dass** der Einstellparameter eine Veränderung einer aktuellen Leistung eines Teilnehmers zur Bereithaltung von Regelleistung bestimmt, insbesondere
- **dass** der Einstellparameter eine Drosselung einer aktuellen Einspeiseleistung eines Teilnehmers bestimmt.

6. Verfahren nach einem der vorangehenden Ansprüche,
**dadurch gekennzeichnet,**
- **dass** die Regelleistung oder Regelleistungsreserve diskret oder kontinuierlich proportional, linear oder nichtlinear zu dem Parameter bestimmt oder bereitsgestellt wird.

7. Verfahren nach einem der vorangehenden Ansprüche,
**dadurch gekennzeichnet,**
- **dass** die Regelleistung oder Regelleistungsreserve erst ab einem bestimmten Totband des Parameters bestimmt oder bereitgestellt wird

8. Verfahren nach einem der vorangehenden Ansprüche,
**dadurch gekennzeichnet,**
- **dass** der Einstellparameter eine positive oder negative Abwurfleistung des Teilnehmers bestimmt.

9. Verfahren nach einem der vorangehenden Ansprüche,
**dadurch gekennzeichnet,**
- **dass** der Parameter basierend auf Prognosen extrapoliert wird und dass die Regelleistung basierend auf dem extrapolierten Parameter bestimmt oder bereitgestellt wird.

10. Verfahren nach einem der vorangehenden Ansprüche,
**dadurch gekennzeichnet,**
- **dass** die Prognosen auf Basis historischer Netz- oder Wetterdaten und/oder Wetterprognosen erstellt werden.

11. Verfahren nach einem der vorangehenden Ansprüche,
**dadurch gekennzeichnet,**
- **dass** die Teilnehmer eine Bereithaltung von Regelleistung abhängig von dem Einstellparameter kommunizieren.

12. Verfahren nach einem der vorangehenden Ansprüche,
**dadurch gekennzeichnet,**
- **dass** ein Leistungsfluss von einem ersten Teilnetz in ein zweites Teilnetz ermittelt oder prognostiziert wird und dass Einstellparameter an alle einspeisenden Teilnehmer des ersten Teilnetzes übermittelt werden, derart, dass die Einstellparameter eine Bereitstellung einer Regelleistung der Teilnehmer bewirken.

13. Leitstelle in einem elektrischen Energieversorgungsnetz umfassend:
- Empfangsmittel eingerichtet zum Empfangen eines elektrischen Parameters, der in zumindest Teilen des Energieversorgungsnetzes in Zeitintervallen erfasst wurde,
- Rechenmittel eingerichtet zum Bestimmen eines Netzzustandes aus dem Parameter und Bestimmen einer bereitzuhaltenden Regelleistung für den Teil des Energieversorgungsnetzes abhängig von dem Netzzustand für ein jeweiliges Zeitintervall,
- Sendemittel eingerichtet zum Übermitteln zumindest eines Einstellparameters an einen Teilnehmer des Teils des Energieversorgungsnetzes zur Bereithaltung einer Regelleistung, mit der sich der Teilnehmer an einer Regelreserve für den Teil des Energieversorgungsnetzes beteiligt.

14. Leitstelle nach Anspruch 13,
**dadurch gekennzeichnet,**
- **dass** die Empfangsmittel die elektrischen Parameter gemäß IEC 60870 und/oder IEC 61850 empfangen und/oder
- **dass** die Sendemittel die Einstellparameter gemäß IEC 60870 und/oder IEC 61850 übermitteln.

## Claims

1. Method for providing control power and/or control power reserve in an electrical power supply network, comprising:
- obtaining at least one parameter in at least parts of the power supply network for a respective period of time and determining a network state from the at least one parameter for the period of time,
- determining a control power to be kept available for the part of the power supply network depending on the network state for the respective period of time,
- transmitting at least one setting parameter to a participant in the part of the power supply network for providing control power with which the participant participates in a control reserve for the part of the power supply network.

2. Method according to claim 1,
**characterized in that**
- the parameter has at least one value from the group:
a) network frequency;
b) phase angle;
c) voltage angle difference between subnetworks;
d) reactive and/or active power;
e) network voltage at the measuring point;
f) power flow;
g) ampacity at the measuring point;
h) feed-in power of at least one participant;
i) effective natural and artificial inertial mass
j) maximum transmission angle (phase angle between two node voltages of the grid or between conventional power plants and their grid feed-in nodes),
k) Minimum and maximum voltage amplitudes or stability reserve at network nodes, also in relation to the voltage stability of networks and network areas,
l) Stability reserve or maximum permissible short-circuit duration in relation to the transient stability of networks or conventional power plant generators
m) stability reserve or pole angle in relation to the static stability of grids or conventional power plant generators
n) harmonic amplitude of voltage and current
o) reactive power demand of the grid
p) criticality of an IT security threat situation

3. Method according to claim 1 or 2,
**characterized in that**
the parameter is at least one differential of the detected value.

4. Method according to one of the preceding claims,
**characterized in that**
- the control power is a primary control power and/or a secondary control power.

5. Method according to one of the preceding claims,
**characterized in that**
- the setting parameter determines a change in the current power of a participant in order to maintain control power, in particular
- the setting parameter determines a reduction in the current feed-in power of a participant.

6. Method according to one of the preceding claims,
**characterized in that**
- that the control power or control power reserve is determined or provided discretely or continuously in a manner proportional, linear or non-linear to the parameter.

7. Method according to one of the preceding claims,
**characterized in that**
- the control power or control power reserve is only determined or provided from a certain dead band of the parameter

8. Method according to one of the preceding claims,
**characterized in that**
- the setting parameter determines a positive or negative shedding power of the participant.

9. Method according to one of the preceding claims,
**characterized in that**
- that the parameter is extrapolated based on forecasts and that the control power is determined or provided based on the extrapolated parameter.

10. Method according to one of the preceding claims,
**characterized in that**
- the forecasts are generated based on historical network or weather data and/or weather forecasts.

11. Method according to one of the preceding claims,
**characterized in that**
- the participants communicate a readiness to provide control power depending on the setting parameter.

12. Method according to one of the preceding claims,
**characterized in that**
a power flow from a first subnetwork to a second subnetwork is determined or predicted and that setting parameters are transmitted to all feed-in participants of the first subnetwork in such a way that the setting parameters cause the participants to provide control power.

13. Control center in an electrical power supply network comprising:
- receiving means arranged to receive an electrical parameter which has been obtained in at least parts of the power supply network at time intervals,
- computing means arranged to determine a network state from the parameter and to determine a control power to be kept available for the part of the power supply network depending on the network state for a respective time interval,
- transmitting means arranged to transmit at least one setting parameter to a participant in the part of the power supply network for providing a control power with which the participant participates in a control reserve for the part of the power supply network.

14. Control center according to claim 13,
**characterized in that**
- the receiving means receive the electrical parameters in accordance with IEC 60870 and/or IEC 61850, and/or
- the transmitting means transmit the setting parameters in accordance with IEC 60870 and/or IEC 61850.

## Revendications

1. Méthode pour fournir une puissance de contrôle et/ou une réserve de puissance de contrôle dans un réseau d'alimentation en énergie électrique, comprenant :
- détecter au moins un paramètre dans au moins des parties du réseau d'alimentation en énergie respectivement pour une période donnée et déterminer un état du réseau à partir du au moins un paramètre pour la période donnée,
- déterminer une puissance de contrôle à maintenir à disposition pour la partie du réseau d'alimentation en énergie en fonction de l'état de réseau pour la période respective,
- transmettre au moins un paramètre de réglage à un participant de la partie du réseau d'alimentation en énergie afin de maintenir une puissance de contrôle avec laquelle le participant participe à une réserve de contrôle pour la partie du réseau d'alimentation en énergie.

2. Méthode selon la revendication 1,
**caractérisé en ce que**
- le paramètre a au moins une valeur parmi le groupe :
a) fréquence du réseau ;
b) angle de phase ;
c) différence d'angle de tension entre des réseaux partiels ;
d) puissance réactive et/ou active ;
e) tension de réseau au point de mesure ;
f) flux de puissance ;
g) intensité de courant au point de mesure ;
h) puissance d'alimentation d'au moins un participant;
i) masse d'inertie naturelle et artificielle effective
j) l'angle de transmission maximal (angle de phase entre deux tensions de nœud du réseau ou entre des centrales électriques conventionnelles et leurs nœuds d'alimentation de réseau),
k) amplitudes de tension minimales et maximales ou réserve de stabilité aux nœuds de réseau, aussi en relation avec la stabilité de tension de réseaux et de zones de réseau,
l) réserve de stabilité ou durée maximale admissible de court-circuit en relation avec la stabilité transitoire de réseaux ou de générateurs de centrales électriques conventionnelles
m) réserve de stabilité ou angle de roue polaire en rapport avec la stabilité statique des réseaux ou des générateurs de centrales électriques conventionnelles
n) amplitude des harmoniques de tension et de courant
o) besoin en puissance réactive du réseau
p) criticité d'une situation de danger pour la sécurité informatique

3. Méthode selon la revendication 1 ou 2,
**caractérisé en ce**
- **que** le paramètre est au moins une différentiel de la valeur enregistrée.

4. Méthode selon l'une des revendications précédentes,
**caractérisé en ce**
- **que** la puissance de contrôle est une puissance de contrôle primaire et/ou une puissance de contrôle secondaire.

5. Méthode selon l'une des revendications précédentes,
**caractérisé en ce**
- **que** le paramètre de réglage détermine une modification d'une puissance actuelle d'un participant pour maintenir la puissance de contrôle, en particulier
- **que** le paramètre de réglage détermine une réduction d'une puissance d'alimentation actuelle d'un participant.

6. Méthode selon l'une des revendications précédentes,
**caractérisé en ce**
- **que** la puissance de contrôle ou la réserve de puissance de contrôle est déterminée ou mise à disposition de manière discrète ou continue, proportionnellement, linéairement ou non linéairement au paramètre.

7. Méthode selon l'une des revendications précédentes,
**caractérisé en ce**
- **que** la puissance de contrôle ou la réserve de puissance de contrôle n'est déterminée ou mise à disposition qu'à partir d'une certaine bande morte du paramètre

8. Méthode selon l'une des revendications précédentes,
**caractérisé en ce**
- **que** le paramètre de réglage détermine une puissance de délestage positive ou négative du participant.

9. Méthode selon l'une des revendications précédentes,
**caractérisé en ce**
- **que** le paramètre est extrapolé sur la base de prévisions et que la puissance de contrôle est déterminée ou mise à disposition sur la base du paramètre extrapolé.

10. Méthode selon l'une des revendications précédentes,
**caractérisé en ce**
- **que** les prévisions sont établies sur la base de données historiques de réseau ou de données météorologiques et/ou de prévisions météorologiques.

11. Méthode selon l'une des revendications précédentes,
**caractérisé en ce**
- **que** les participants communiquent une mise à disposition de puissance de contrôle en fonction du paramètre de réglage.

12. Méthode selon l'une des revendications précédentes,
**caractérisé en ce**
- **qu'**un flux de puissance d'un premier sous-réseau vers un deuxième sous-réseau est déterminé ou prévu et que des paramètres de réglage sont transmis à tous les participants alimentant le premier sous-réseau de telle sorte que les paramètres de réglage provoquent une mise à disposition d'une puissance de contrôle des participants.

13. Centre de contrôle dans un réseau d'alimentation en énergie électrique comprenant :
- des moyens de réception configurés pour recevoir un paramètre électrique qui a été enregistré à intervalles de temps dans au moins certaines parties du réseau d'alimentation en énergie,
- des moyens de calcul configurés pour déterminer un état de réseau à partir du paramètre et pour déterminer une puissance de régulation à maintenir pour la partie du réseau d'alimentation en énergie en fonction de l'état de réseau pour un intervalle de temps respectif,
- des moyens d'émission configurés pour transmettre au moins un paramètre de réglage à un participant de la partie du réseau d'alimentation en énergie afin de maintenir une puissance de contrôle avec laquelle le participant participe à une réserve de contrôle pour la partie du réseau d'alimentation en énergie.

14. Centre de contrôle selon la revendication 13,
**caractérisé en ce**
- **que** les moyens de réception reçoivent les paramètres électriques conformément à la norme CEI 60870 et/ou CEI 61850 et/ou
- **que** les moyens de transmission transmettent les paramètres de réglage conformément à la norme CEI 60870 et/ou CEI 61850.
